# FASCICULE DE BREVET EUROPEEN

(11) **EP 4 355 601 B1**
(45) Date de publication et mention de la délivrance du brevet: **05.03.2025**
(21) Numéro de dépôt: 22735376.0
(22) Date de dépôt: 15.06.2022
(51) Int. Cl.: B60K 28/02, B60W 50/00, B60W 50/08, B60H 1/00, B60Q 3/72, B60Q 3/80, B60Q 9/00, B60K 35/00

(54) **PROCÉDÉ DE SÉLECTION D'UN SERVICE RELAXANT OU STIMULANT POUR UN CONDUCTEUR D'UN VÉHICULE AUTOMOBILE**
VERFAHREN ZUR AUSWAHL EINES ENTSPANNUNGS- ODER STIMULATIONSDIENSTES FÜR EINEN FAHRER EINES KRAFTFAHRZEUGS
METHOD FOR SELECTING A RELAXING OR STIMULATING SERVICE FOR A DRIVER OF A MOTOR VEHICLE

(30) Priorité: 15.06.2021 FR 2106317
(43) Date de publication de la demande: 24.04.2024
(73) Titulaire: Renault s.a.s, 92100 Boulogne Billancourt (FR); NISSAN MOTOR CO., LTD., Yokohama-shi, Kanagawa 221-0023 (JP)
(72) Inventeur: LE-HIR, Nathalie, 78084 Guyancourt cedex Guyancourt (FR); MOZZO, Denis, 78084 Gyuancourt cedex (FR)
(74) Mandataire: Renault Group
(86) Numéro de dépôt international: PCT/EP2022/066412
(87) Numéro de publication internationale: WO 2022/263567

(56) Documents cités:
- US-A1- 2008 180 257
- US-A1- 2018 001 903
- US-A1- 2021 031 786

## Description

L'invention concerne un procédé de sélection d'un service relaxant ou stimulant pour un conducteur d'un véhicule automobile. L'invention porte encore sur un système de sélection d'un service et d'un véhicule équipé d'un tel système. L'invention porte également sur un programme d'ordinateur mettant en œuvre le procédé mentionné.

Dans l'industrie automobile, il est connu d'équiper les véhicules de systèmes proposant des services destinés à affecter un état ou une humeur du conducteur, notamment des services relaxants ou encore stimulants. De tels services peuvent notamment être proposés et exécutés lorsque le véhicule est à l'arrêt ou lorsque le véhicule est en mouvement.

US 2021/031786 A1 propose un système qui détermine que la condition biométrique d'un occupant d'un véhicule s'écarte d'une condition biométrique optimale associée à des conditions environnementales extérieures de véhicule et des conditions environnementales intérieures de véhicule. Une contre-mesure est alors sélectionnée.

De par la large variété de services existants, les systèmes existants peuvent être amenés à proposer des services inadaptés au conducteur d'une part et/ou inadaptés à une situation particulière dans laquelle est le conducteur d'autre part.

L'invention s'inscrit dans ce contexte et vise à fournir un procédé de sélection d'un service à l'attention du conducteur permettant de résoudre les inconvénients précités à moindre coût.

L'invention propose un procédé de sélection d'un service relaxant ou stimulant pour un conducteur d'un véhicule automobile équipé d'au moins une unité de mémoire dans laquelle est enregistrée une liste de services destinés au conducteur. Le procédé de sélection comprend :
- une étape de détection d'un état physiologique du conducteur ou une étape de renseignement d'un besoin du conducteur ;
- une étape de détection d'un contexte extérieur et/ou d'un contexte intérieur au véhicule; et
- une étape de calcul d'un niveau de disponibilité du conducteur en fonction des données relatives au contexte extérieur et/ou au contexte intérieur au véhicule;
- une étape de consultation de préférences d'utilisation du conducteur ; et
- une étape de consultation de données caractérisant un au moins un niveau d'expérience d'utilisation des services relaxants ou stimulants par le conducteur ; puis
- la sélection d'au moins un service relaxant ou stimulant dans la liste de services étant réalisée en fonction de l'état physiologique du conducteur ou en fonction du besoin du conducteur, en fonction du niveau de disponibilité du conducteur, en fonction des préférences d'utilisation du conducteur et en fonction des données caractérisant le niveau d'expérience du conducteur du véhicule.

Le procédé de sélection peut comprendre une première phase de sélection d'un premier sous-ensemble de services, comprenant au moins un service, au sein de la liste de services, la première phase de sélection étant réalisée en fonction de l'état physiologique du conducteur afin de corriger l'état détecté du conducteur ou la première phase de sélection étant réalisée en fonction d'un besoin du conducteur afin de répondre à celui-ci. Le procédé peut, ensuite, comprendre une deuxième phase de sélection d'un deuxième sous-ensemble de services, au sein du premier sous-ensemble, réalisée en fonction du niveau de disponibilité du conducteur, en fonction des préférences d'utilisation du conducteur et en fonction du niveau d'expérience du conducteur.

Le procédé de sélection peut comprendre une étape de sélection aléatoire, mise en œuvre lorsque, à l'issue de la sélection d'au moins un service en fonction de l'état physiologique du conducteur ou en fonction du besoin du conducteur, et en fonction du niveau de disponibilité, des préférences d'utilisation et du niveau d'expérience du conducteur, une pluralité de services sont disponibles.

L'étape de détection d'un état du conducteur peut comprendre :
- une sous-étape de mesure d'au moins un paramètre émotionnel et/ou physiologique du conducteur ; et/ou
- une sous-étape de détection d'au moins un comportement de conduite anormal ou à risque par au moins un système d'aide à la conduite et/ou par un organe de mesure équipé(s) dans le véhicule ; et
- une sous-étape de classification de l'état du conducteur en fonction du paramètre physiologique du conducteur et/ou en fonction du comportement de conduite du conducteur, la sélection d'un service étant mise en œuvre lorsqu'un état anormal du conducteur est détecté.

L'étape de calcul d'un niveau de disponibilité du conducteur peut comprendre une sous-étape de classification du niveau de disponibilité du conducteur en fonction des données relatives au contexte extérieur et/ou au contexte intérieur au véhicule.

En outre, le procédé de sélection peut comprendre au moins une étape de renseignement d'au moins une préférence du conducteur relative à tout ou partie des services compris dans la liste de services, l'étape de renseignement pouvant être exécutée préalablement à l'étape de détection d'un état du conducteur ou à l'étape de renseignement d'un besoin du conducteur, notamment lorsque le véhicule est à l'arrêt, et/ou l'étape de renseignement pouvant être exécutée ultérieurement à la sélection d'un service.

L'étape de consultation du niveau d'expérience du conducteur peut comprendre une étape de détermination du niveau d'expérience d'utilisation des services en fonction d'un nombre d'occurrences d'exécution, par le conducteur, des services et une étape de comparaison du niveau d'expérience avec un indice d'expérience, propre à chaque service et définissant un niveau minimum d'expérience requis par le conducteur pour la bonne exécution du service, le service étant sélectionné lorsque l'indice d'expérience est inférieur ou égal au niveau d'expérience du conducteur détecté.

L'invention concerne également un procédé de relaxation ou de stimulation d'un conducteur d'un véhicule automobile, le procédé comprenant dans un premier temps les étapes du procédé de sélection tel qu'exposé précédemment puis une étape d'exécution d'au moins un service sélectionné, mise en œuvre lorsque un nombre de services sélectionnés à l'issue de procédé de sélection est supérieur ou égal à 1, ou une étape d'interruption anticipée du procédé d'exécution, mise en œuvre lorsque le nombre de services sélectionnés à l'issue de procédé de sélection est nul.

Le procédé de relaxation ou de stimulation peut comprendre une étape de blocage d'une répétition des étapes du procédé de sélection mise en œuvre suite à une étape d'exécution d'un service lors d'un cycle d'exécution du procédé de sorte à prévenir l'exécution successive de services dans un intervalle de durée inférieur à une valeur seuil prédéfinie.

Le procédé de relaxation ou de stimulation peut comprendre, ultérieurement à l'exécution d'un service, une étape de sauvegarde du niveau d'expérience du conducteur relativement audit service ou une étape de modification d'un niveau d'expérience du conducteur relativement audit service préalablement enregistré.

L'invention porte encore sur un système de sélection d'un service relaxant ou stimulant pour un conducteur d'un véhicule automobile, le système comprenant des éléments matériels et/ou logiciels mettant en œuvre le procédé de sélection selon l'invention, les éléments matériels comportant au moins une unité de traitement de données configurée pour coopérer avec au moins une unité de mémoire sur laquelle est enregistrée la liste de services destinés au conducteur.

L'invention concerne également un véhicule automobile équipé d'un système de sélection tel que décrit ci-dessus et d'au moins un moyen de mise en œuvre d'un ou de plusieurs service(s) relaxant(s) ou stimulant(s).

D'autres détails, caractéristiques et avantages ressortiront plus clairement à la lecture de la description détaillée donnée ci-après, à titre indicatif et non limitatif, en relation avec les différents exemples de réalisation illustrés sur les figures suivantes :
La figure 1 représente schématiquement un mode de réalisation d'un véhicule équipé d'un système de sélection.
La figure 2 est un ordinogramme général d'exécution d'un procédé de sélection.
La figure 3 est un ordinogramme détaillé d'un exemple d'exécution d'une étape de détection d'un état d'un conducteur du procédé de sélection.
La figure 4 est un ordinogramme détaillé d'un exemple alternatif d'exécution de l'étape de détection d'un état du conducteur.
La figure 5 est un ordinogramme général d'un mode alternatif d'exécution du procédé de sélection.
La figure 6 est un ordinogramme général d'un mode particulier d'exécution du procédé de sélection.

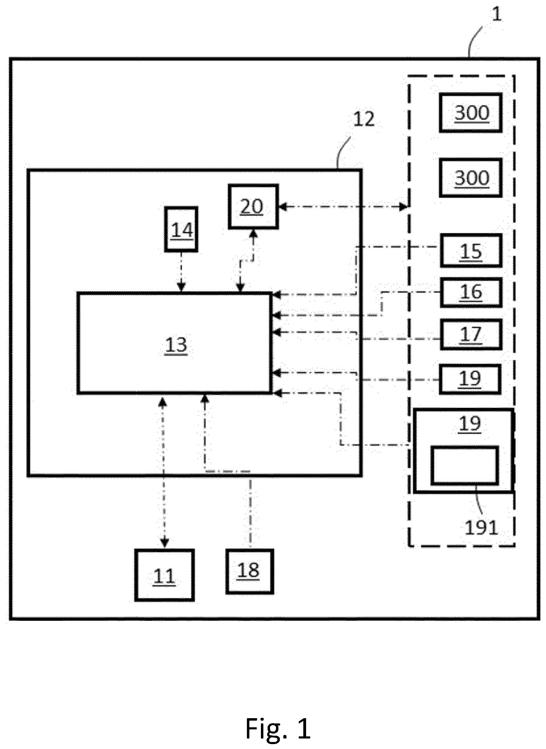

La figure 1 illustre schématiquement un véhicule 1 automobile selon un mode de réalisation de l'invention. Le véhicule 1 peut être de toute nature. Notamment, il peut être un véhicule particulier, un véhicule utilitaire, un camion ou un bus. Egalement, le véhicule peut être un véhicule autonome ou non autonome.

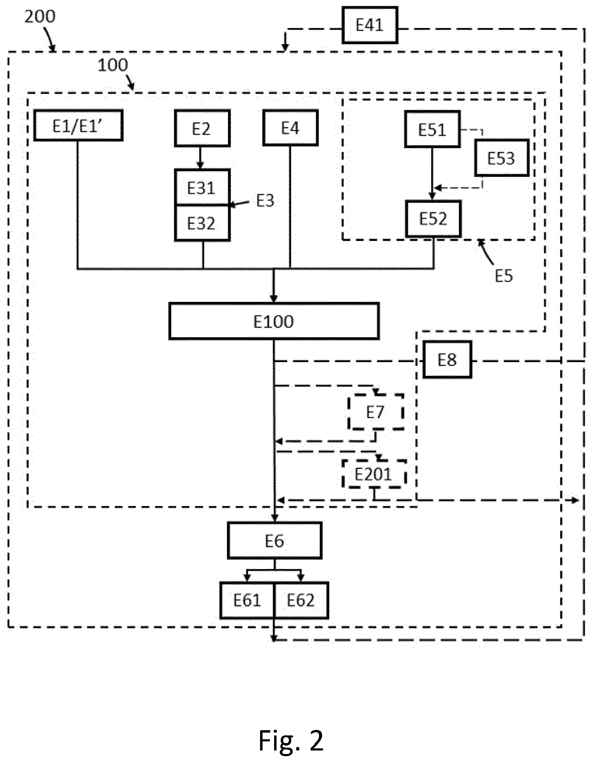

Le véhicule 1 est équipé de manière à proposer à un conducteur une variété de services, notamment des services relaxants ou stimulants. En ce sens, le véhicule 1 peut être équipé de moyens 300 de mise en œuvre de tels services, par exemple un système d'éclairage intérieur, un système de climatisation, un système de chauffage, un système de sonorisation intérieure, un système de création d'ambiance olfactive, ou un système de création d'ambiance lumineuse et/ou tactile. Le véhicule est également équipé d'au moins une unité de mémoire 11 sur laquelle est enregistrée une liste de services, notamment des services relaxants ou stimulants, destinés au conducteur. Le véhicule 1 comporte, en outre, un système de sélection 12 d'un service à l'attention du conducteur comprenant des éléments matériels et/ou logiciels apte à mettre en œuvre un procédé de sélection 100 d'un service tel qu'illustré aux figures 2 à 6.

Le système 12 comprend notamment au moins une unité de traitement 13 de données. Selon un exemple particulier, le système peut comprendre l'unité de mémoire 11 sur laquelle est enregistré la liste de services, de manière alternative, le système peut être configuré de manière à échanger des données avec l'unité de mémoire 11 comprise dans le véhicule 1. Additionnellement, le système 12 peut comprendre au moins un élément de mémoire 14 qui lui est propre.

L'unité de traitement 13 comprend au moins une unité de calcul comportant des ressources matérielles et logicielles plus précisément au moins un processeur, ou microprocesseur, coopérant avec l'unité de mémoire 11 et/ou avec l'élément de mémoire 14. Cette unité de calcul est apte à exécuter des instructions pour la mise en œuvre d'un programme d'ordinateur.

Le système de sélection 12 peut, en outre, comprendre, ou être apte à échanger des données avec différents éléments du véhicule, tels que:
- un moyen de localisation 15 de la position du véhicule 1 dans une infrastructure routière ; et/ou
- une unité de surveillance 16 d'un état de l'utilisateur ; et/ou
- un module de communication 17 avec un appareil connecté et/ou une base de données ; et/ou
- un ou des organe(s) de mesure 18 de données relatives au véhicule 1, notamment de la vitesse longitudinale du véhicule 1 ; et/ou
- un ou plusieurs système(s) d'aide à la conduite 19.

Le moyen de localisation 15 permet la localisation du véhicule 1 dans l'infrastructure routière. Il intègre, par exemple, un système de localisation du véhicule et/ou une cartographie de l'infrastructure routière. Notamment, la localisation du véhicule 1 peut être fournie par un système de type GPS, de l'acronyme anglais « Global Positioning system ». Alternativement ou en complément, le moyen de localisation 15 peut être un système de localisation embarqué dans le véhicule 1. La localisation du véhicule 1 permet d'extraire d'une base de données de cartographie des informations concernant l'infrastructure routière et/ou la topologie et/ou la géographie dans un rayon de quelques centaines de mètres autour de la position du véhicule 1.

L'unité de surveillance 16 est configurée pour surveiller un état physiologique du conducteur et permettre, de manière non limitative, la détection d'un état de fatigue, d'endormissement ou encore de stress ou d'anxiété de celui-ci susceptible d'affecter son comportement lors de la conduite. L'unité de surveillance 16 peut comprendre au moins un capteur de surveillance, tel qu'une caméra aménagée dans l'habitacle du véhicule 1 ou un capteur équipé dans un élément du véhicule 1, par exemple un volant, apte à mesurer au moins un paramètre physiologique du conducteur parmi notamment la direction du regard, le mouvement de la tête, la fréquence cardiaque ou l'activation électrodermale.

Le module de communication 17 permet au véhicule 1 de recevoir les données issues d'une base de données, d'appareils connectés, par exemple d'un téléphone connecté, d'un véhicule distant connecté ou encore d'un élément d'infrastructure routière ou urbaine connecté au moyen d'une liaison sans fil, basse fréquence ou haute fréquence. Il peut, par exemple, s'agir d'une liaison sans fil basée sur des technologies « cellulaire», « Bluetooth » ou « WI-FI » (marques déposées). De telles données peuvent, de manière non exhaustive, être relatives au conducteur, par exemple une utilisation en cours d'un appareil connecté ou un évènement programmé dans un agenda, ou être relatives à un contexte extérieur au véhicule 1, par exemple des conditions météorologiques, de trafic, topologiques ou géographiques.

Le ou les organes de mesure 18 sont aptes à réaliser des mesures relatives à un ou plusieurs paramètres du véhicule 1 tels que, de manière non limitative, la vitesse longitudinale, l'accélération et/ou le ralentissement du véhicule, la pression exercée sur la pédale de frein ou la vitesse de pression exercée sur la pédale de frein. Alternativement, tout ou partie desdits paramètres peuvent être mesurés par un système d'aide à la conduite 19.

Tel qu'illustré, le véhicule 1 peut être équipé d'au moins un système d'aide 19 à la conduite comprenant notamment au moins un moyen de détection 191 de l'environnement du véhicule 1 comme par exemple un radar et/ou un lidar et/ou une caméra. On entend, à titre d'exemple non limitatif, par « système d'aide à la conduite » un système de freinage autonome d'urgence, également dénommés système AEB, de l'anglais "Automatic Emergency Braking", un système de détection de véhicules environnants et/ou un système d'aide au stationnement. Notamment, le véhicule 1 peut comprendre une pluralité de systèmes d'aide 19 à la conduite.

L'unité de traitement 13 du système de sélection 12 est ainsi apte à échanger des informations avec l'unité de mémoire 11, mais est également apte à recevoir des données issues moyen de localisation 15 et/ou de l'unité de surveillance 16 et/ou du module de communication 17 et/ou d'au moins le ou les organe(s) de mesure 18 et/ou du ou des systèmes d'aide à la conduite 19 tels que précédemment exposé, de telles données étant alors utilisées dans le procédé tel qu'exposé ci-après afin de permettre la sélection d'un service pour le conducteur. L'unité de traitement 13 peut également échanger avec une unité de contrôle 20, équipée dans le véhicule et pouvant, par exemple, être comprise dans le système de sélection 12. Une telle unité de contrôle 20 peut, par exemple, être apte à agir sur les différents composants 11, 14, 15, 16, 17, 18 ou 19 précités et/ou sur les moyens 300 de mise en œuvre d'un ou de plusieurs services relaxant(s) ou stimulant(s) et/ou être apte à contrôler un statut de fonctionnement, par exemple des paramètres ou réglages exécutés, de ceux-ci.

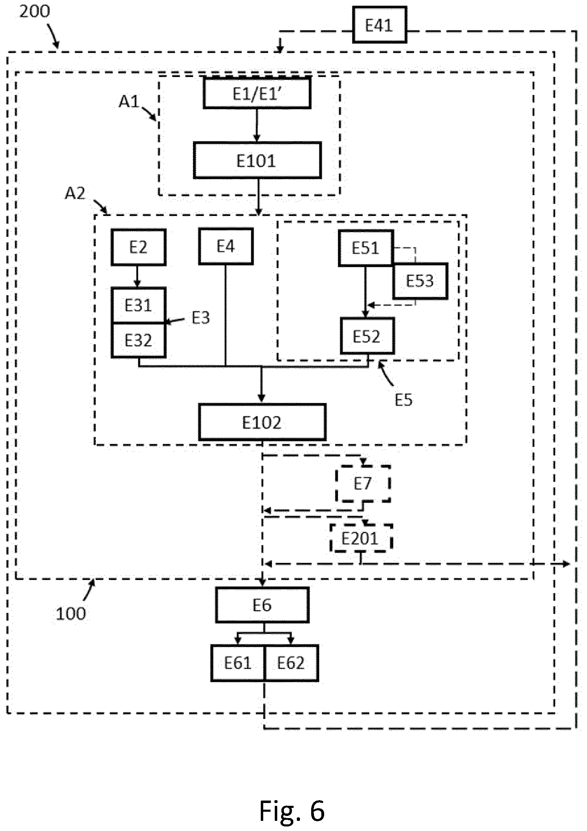

Un organigramme général et un exemple particulier d'exécution du procédé de sélection 100 sont respectivement illustrés aux figures 2 et 6. Le procédé de sélection 100 peut également être considéré comme étant un procédé de fonctionnement du système de sélection 12 selon l'invention ou comme un procédé de fonctionnement d'un véhicule 1 automobile équipé d'un tel système. Le procédé est particulièrement configuré afin de mettre en œuvre la sélection d'au moins un service relaxant ou stimulant, en vue de son exécution, en fonction d'un état physiologique du conducteur, permettant par exemple de détecter indirectement un état émotionnel du conducteur. Notamment, le service sélectionné par le procédé peut alors viser à corriger, au moins en partie, un tel état. Alternativement, le procédé selon l'invention peut être exécuté en fonction d'un besoin du conducteur, notamment renseigné par celui-ci. Le service est alors sélectionné afin de répondre à un tel besoin. Le procédé est également configuré afin de mettre en œuvre une telle sélection en fonction d'un niveau de disponibilité du conducteur, de préférences d'utilisation du conducteur et de données caractérisant un niveau d'expertise du conducteur du véhicule et/ou un niveau d'expérience d'utilisation des services. Les figures 2 et 6 illustrent également un procédé de relaxation ou de stimulation 200 du conducteur comprenant les étapes du procédé de sélection 100 selon l'invention.

Le procédé de sélection 100 comprend une étape de détection E1 d'un état du conducteur ou une étape de renseignement E1' d'un besoin du conducteur.

Lorsque le procédé comprend l'étape de détection E1 d'un état physiologique du conducteur, il permet notamment de détecter et distinguer un état normal, ou équilibré, du conducteur d'un état anormal. Particulièrement, le procédé peut être exécuté de manière conditionnelle de sorte qu'il ne se poursuit que lorsqu'un état anormal, ou non équilibré, du conducteur est détecté. Le procédé vise alors à corriger un tel état anormal détecté afin de ramener le conducteur vers, ou dans, un état normal ou équilibré. Autrement dit, le procédé vise à répondre à un besoin du conducteur identifié par le véhicule 1. Alternativement, lorsqu'un état normal, ou équilibré, est détecté, le ou les service(s) peu(ven)t être sélectionné(s) selon qu'il(s) permette(nt) de maintenir un tel état.

A titre d'exemple non limitatif, un état anormal du conducteur peut être relatif à un état de stress ou d'anxiété, c'est-à-dire un état dans lequel le conducteur est sur-stimulé et requiert un service relaxant, ou à un état de fatigue, d'endormissement ou d'ennui, c'est-à-dire un état sous-stimulé dans lequel il requiert un service stimulant ou dynamisant.

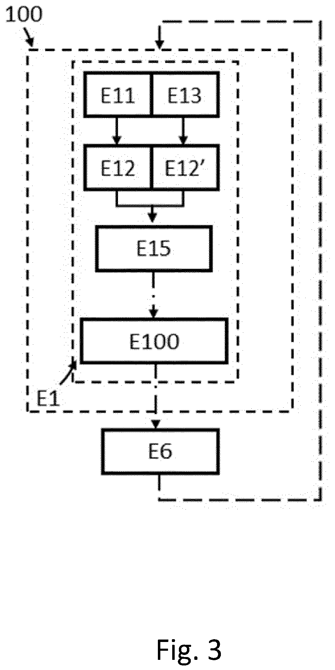

Tel que détaillé à la figure 3, l'étape de détection E1 peut comprendre une sous-étape de mesure E11 directe d'au moins un paramètre physiologique du conducteur. Par exemple, l'unité de surveillance 16 peut mesurer la direction du regard, le mouvement de la tête, la fréquence cardiaque ou l'activation électrodermale du conducteur, de tels paramètres permettant, entre autres, la détection d'une agitation, notamment représentative d'un état de stress ou d'anxiété du conducteur, puis transmet ces mesures à l'unité de traitement 13. Le système de sélection 12 exécute alors une sous-étape de classification E12 de l'état du conducteur en fonction du critère physiologique du conducteur. En d'autres termes, l'unité de traitement 13 est apte à réaliser des opérations de calcul et de comparaison propre à déterminer si le(s) critère(s) mesuré(s) dépasse(nt), par une valeur supérieure ou inférieure, au moins un seuil de référence donné, permettant ainsi, le cas échéant, l'identification d'un état du conducteur parmi les différents états précités.

Alternativement ou en combinaison de l'étape de mesure E11, la détection d'un état physiologique du conducteur peut être réalisée indirectement par analyse de sa conduite. Le procédé peut alors comprendre une sous-étape de détection E13 d'au moins un comportement de conduite anormal ou à risque exécutée par l'intermédiaire du ou des système(s) d'aide 19 à la conduite et/ou par l'intermédiaire du ou des organe(s) de mesure 18 du véhicule 1. Au moins un paramètre émotionnel et/ou physiologique du conducteur peut alors être indirectement défini par la conduite du conducteur. Par exemple, le déclenchement, à au moins une reprise ou de manière répétée, d'un évènement initié par le ou les système(s) d'aide 19 à la conduite visant à prévenir une situation à risque, tel qu'un freinage mis en œuvre par un système AEB, peut être caractéristique d'un état de somnolence du conducteur. Selon un autre exemple, la détection d'une vitesse longitudinale anormalement irrégulière par le ou les organes(s) de mesure peut être définie comme étant caractéristique d'un état de stress du conducteur.

De manière optionnelle, une telle détection E13 peut également prendre en considération un environnement extérieur au véhicule 1, par exemple des conditions météorologiques ou une géolocalisation, fournie par le moyen de localisation 15 notamment.

Le procédé comprend alors une étape de classification E12' de l'état du conducteur similaire à l'étape de classification E12 précédemment exposée, à la différence qu'elle est cette fois exécutée en fonction du comportement de conduite du conducteur détecté par l'intermédiaire du ou des systèmes d'aide à la conduite et/ou du ou des organes de mesure 18 équipés sur le véhicule 1.

Selon l'exemple de réalisation illustré à la figure 3, lorsque l'étape de détection comprend une sous-étape de mesure E11 d'au moins un critère émotionnel et/ou physiologique du conducteur et une sous-étape de détection E13, lesdites sous-étapes peuvent être exécutées au moins en partie simultanément l'une à l'autre. Le procédé peut alors particulièrement se poursuivre dès lors qu'un état anormal est identifié des suites de la sous-étape E11 et/ ou de la sous-étape E13.

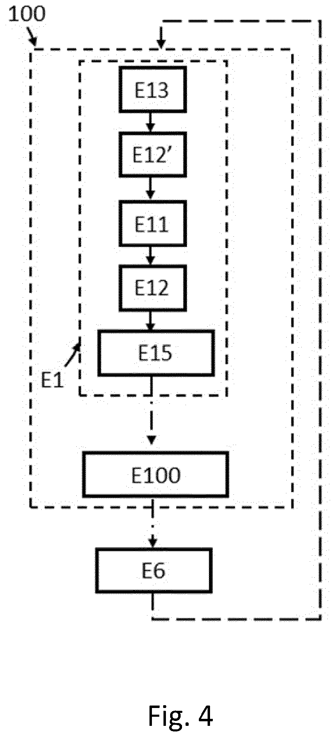

Alternativement, tel qu'illustré à la figure 4, l'une desdites sous-étapes E11, E13 peut être exécutée de manière à confirmer un état détecté lors de l'autre desdites sous-étapes. Par exemple, le système d'aide 19 à la conduite peut détecter un état d'endormissement du conducteur du fait du déclenchement répété de freinages d'urgence puis l'unité de surveillance 16 peut confirmer un tel état sur la base d'une mesure du rythme cardiaque ou d'une fréquence de l'abaissement des paupières du conducteur. Autrement dit, les sous-étapes E11, E13 sont alors exécutées successivement l'une à l'autre. Le fonctionnement inverse peut également être mis en œuvre, c'est-à-dire que le système d'aide 19 à la conduite et/ou un ou des organes de mesures permettent la confirmation d'un état du conducteur détecté par l'unité de surveillance 16.

La sélection d'un service en fonction d'un état est notamment réalisée de manière à corriger l'état détecté du conducteur, c'est-à-dire qu'un tel service vise à ramener le conducteur vers, ou dans, un état équilibré. Ainsi, chaque service est caractérisé par des données relatives à un identifiant ainsi qu'à au moins un indice d'état et/ou de besoin, correspondant à l'état détecté auquel il est destiné et/ou un besoin auquel il répond. Par exemple, certains services d'exercices de respiration ou de yoga sont destinés à un conducteur présentant un état de sur-stimulation, c'est-à-dire un état de stress ou d'anxiété, et répondent à un besoin de relaxation. Le procédé comprend ainsi, suite à l'exécution de la sous-étape E11 et/ou de la sous-étape E13, une sous-étape de comparaison E15 de l'état détecté du conducteur avec l'indice d'état et/ou de besoin propre à chaque service afin de permettre la sélection d'un service adapté à un état physiologique du conducteur à un moment donné.

Le système exécute également une étape de détection E2 d'un contexte extérieur et/ou d'un contexte intérieur au véhicule. De telles données peuvent ensuite être utilisées par le système de sélection 12 afin de définir le niveau de disponibilité du conducteur. Autrement dit, le procédé comprend ensuite une étape de calcul E3 d'un niveau de disponibilité du conducteur en fonction des données relatives au contexte extérieur et/ou au contexte intérieur au véhicule. Selon le mode d'exécution du procédé illustré aux figures 2 à 5, tout ou partie de l'étape E2 et/ou de l'étape E3 peut être exécuté simultanément à l'étape E1 tel que précédemment exposé.

On entend par niveau de « disponibilité » un paramètre visant à définir un degré auquel le conducteur peut être interpellé ou un degré d'attention du conducteur pouvant être requis lors de l'exécution du service. Un tel paramètre vise notamment à adapter le service à exécuter de manière à ne pas interpeller ou interrompre le conducteur à un moment inopportun, voire dans une situation à risque ou susceptible de générer un risque.

L'étape de calcul E3 du niveau de disponibilité du conducteur comprend, similairement à ce qui a été précédemment exposé relativement à l'état du conducteur, une sous-étape de classification E31 de la disponibilité du conducteur en différents niveaux. A titre d'exemple non limitatif, la disponibilité du conducteur peut être classée selon au moins trois niveaux :
- un niveau de disponibilité totale pour lequel un service mis en œuvre peut, par exemple, interpeller le conducteur sans risque ou sans générer de gêne, notamment en sollicitant tout ou partie de son attention ;
- un niveau d'indisponibilité totale, pour lequel le service exécuté doit être discret et ne doit pas interpeller ou solliciter le conducteur ;
- au moins un niveau intermédiaire de disponibilité, compris entre le niveau de disponibilité totale et le niveau d'indisponibilité totale, pour lequel l'attention du conducteur peut être en partie sollicitée.

Les données relatives au contexte intérieur du véhicule peuvent notamment concerner un statut du véhicule 1, c'est-à-dire notamment si le véhicule est à l'arrêt, en phase de roulage ou encore si un incident technique a été détecté. Ces données sont, par exemple, transmises à l'unité de traitement 13 du système de sélection 12 par le ou les organes de mesure 18 équipés sur le véhicule et peuvent concerner un statut d'au moins un moteur du véhicule 1, du frein de parking, une vitesse longitudinale du véhicule ou une régularité d'une telle vitesse. Egalement, ces données peuvent être communiquées par le ou les système(s) d'aide 19 à la conduite, par exemple afin de renseigner le système de sélection 12 sur une fluidité de la conduite, un nombre de dépassements opérés, ou tout autre valeur susceptible d'être pertinente. Ainsi, lorsque le véhicule 1 est à l'arrêt, ou si le véhicule 1 se déplace à une vitesse longitudinale faible, par exemple inférieure à 15 km/h, le système de sélection peut déduire, à la suite de son calcul, un état de disponibilité totale du conducteur. A l'inverse, si le véhicule 1 est en marche et présente une vitesse longitudinale élevée, le conducteur peut être considéré comme présentant une disponibilité intermédiaire ou comme étant indisponible.

Le contexte intérieur au véhicule peut également concerner l'utilisation d'un appareil connecté, par exemple d'un téléphone, ou encore l'utilisation de systèmes embarqués dans le véhicule, par exemple un système multimédia, non représenté. Autrement dit, le système de sélection 12 peut également être configuré afin de prendre en considération au moins un appareil connecté, en particulier l'utilisation qui est faite de celui-ci. Par exemple, si un appel est en cours, le conducteur sera considéré comme étant indisponible.

Alternativement ou additionnement, le niveau de disponibilité du conducteur peut être défini en fonction de données relatives au contexte extérieur au véhicule 1, c'est-à-dire par exemple des données relatives aux conditions météorologiques, topologiques, géographiques ou encore relatives au trafic. Par exemple, ces données peuvent être transmises par au moins l'un parmi le ou les système(s) d'aide à la conduite 19, le ou les organes de mesure, le moyen de localisation 15 ou un appareil connecté. Un trafic encombré, de mauvaises conditions météorologiques, des routes de montagne ou dangereuses pourront par exemple être caractéristiques du niveau « indisponible » ou d'un niveau de « disponibilité intermédiaire ».

L'étape de classification E31 du niveau de disponibilité du conducteur peut être réalisée de manière à prendre simultanément en compte toutes les données reçues relatives à la disponibilité du conducteur afin de définir directement son niveau de disponibilité. Alternativement, le système de sélection 12 peut, au préalable, associer à chaque type de données un niveau de disponibilité du conducteur puis, sur la base de ceux-ci, calculer un niveau général de disponibilité. Particulièrement, le système peut être configuré afin que, si au moins un type de données, par exemple l'utilisation d'un appareil connecté, indique un état d'indisponibilité du conducteur, le niveau de disponibilité général du conducteur sera qualifié « d'indisponible ».

Ainsi, selon des exemples non limitatifs, si le conducteur est en cours de conversation téléphonique, il est considéré comme étant indisponible, même s'il évolue sur une autoroute avec un faible trafic ou s'il est à l'arrêt. Il est alors nécessaire de sélectionner, parmi les services du premier sous-ensemble, un service discret, voire imperceptible, qui ne demande aucune contribution de la part du conducteur. Par exemple, un tel service peut comprendre la régulation de la température de l'habitacle ou encore de sa luminosité, sans nécessiter de réglage ou d'intervention de la part du conducteur. A l'inverse, lorsque le véhicule 1 est à l'arrêt, notamment au niveau d'une zone de stationnement, et que le conducteur est jugé comme étant disponible, par exemple à la fin d'un trajet, un service l'engageant fortement pourra être choisi parmi les services compris dans le premier sous-ensemble, par exemple des exercices de respiration ou de yoga, avec les yeux ouverts ou même fermés.

Suite à la sous-étape E31, le procédé comprend une sous-étape de comparaison E32 du niveau de disponibilité du conducteur calculé avec un indice de disponibilité, propre à chaque service, définissant un niveau de disponibilité du conducteur nécessaire pour que le service puisse être exécuté. Autrement dit, le service est sélectionné s'il présente un indice de disponibilité inférieur ou égal au niveau de disponibilité calculé du conducteur.

Le procédé comprend également une étape de consultation E4 de préférences d'utilisation du conducteur, notamment des préférences sauvegardées sur l'unité de mémoire 11 comprise dans le véhicule ou dans le système de sélection 12. Alternativement, de telles préférences peuvent être sauvegardées dans l'élément de mémoire 14 du système de sélection 12. Le critère de « préférence » est défini en fonction des goûts et/ou choix du conducteur. En ce sens, le procédé peut comprendre au moins une étape de renseignement E41 d'au moins une préférence du conducteur relative à tout ou partie des services compris dans la liste de services. Une telle étape peut être exécutée préalablement à l'étape de consultation E4, par exemple lorsque le véhicule 1 est à l'arrêt ou lors du réglage du système de sélection 12 ou du véhicule 1. Alternativement, l'étape de renseignement E41 peut être exécutée à la fin d'un cycle d'exécution du procédé de sélection 100, c'est-à-dire par exemple après qu'un service sélectionné ait été mis en œuvre. Selon une alternative non représentée, le procédé peut comprendre une pluralité d'étapes de renseignement d'une préférence, de sorte que l'une est exécutée au début du procédé, tandis que l'autre est exécutée à la fin de celui-ci.

L'étape de renseignement E41 peut ainsi comprendre une sous-étape d'entrée d'une préférence, par exemple définie par un système de notation ou d'appréciation du service, ainsi qu'une sous-étape de sauvegarde d'une telle préférence ou une sous-étape de modification de données préalablement enregistrées relatives à ladite préférence. L'entrée de la préférence peut être réalisée par saisie manuelle, par exemple par l'intermédiaire d'un menu spécifique présenté sur une interface Homme-machine équipée dans le véhicule 1. Le conducteur peut alors sélectionner, désélectionner ou encore noter les services. Selon un autre exemple de réalisation, une telle préférence peut avoir été détectée par le véhicule 1 lors d'un cycle antérieur d'exécution du procédé. Par exemple, un service peut être considéré comme préféré si l'utilisateur le laisse s'exécuter dans son intégralité ou si au moins un critère physiologique du conducteur tel que précédemment exposé indique que le conducteur apprécie le service. A l'inverse, un service peut être considéré comme non désirable si le conducteur l'interrompt manuellement, par l'intermédiaire de l'interface Homme-machine notamment, ou si un tel service semble davantage éloigner le conducteur d'un état normal ou équilibré, par exemple si ledit service génère un stress ou un énervement additionnel chez le conducteur.

Le niveau « d'expertise » du conducteur est notamment relatif à un niveau d'expérience du conducteur dans la pratique des différents services compris dans la liste, c'est-à-dire à dire sa capacité à utiliser lesdits services et à sa familiarité vis-à-vis desdits services. En effet, il est préférable que le conducteur, si sa contribution est requise lors de l'exécution du service, puisse exécuter celui-ci sans difficulté, ou du moins sans difficultés excessives, en particulier si le service est exécuté lors d'une phase de roulage et qu'il est essentiel de ne pas détourner inopinément l'attention du conducteur.

Le procédé comprend ainsi une étape de consultation E5 de données caractérisant le niveau d'expertise du conducteur, celui-ci étant au moins défini en fonction du niveau d'expérience d'utilisation des services par le conducteur. Autrement dit le procédé comprend une étape de consultation E5 de données caractérisant le niveau d'expertise du conducteur et/ou le niveau d'expérience d'utilisation des services par le conducteur. Le niveau d'expérience du conducteur peut, selon un exemple de réalisation, au moins être défini par l'intermédiaire d'une sous-étape de détermination E51 du niveau d'expérience d'utilisation des services en fonction d'un nombre d'occurrences d'exécution, par le conducteur, des services. Par exemple, le système de sélection 12 peut comprendre un compteur configuré pour augmenter un nombre d'occurrences d'exécution d'un service considéré dès lors que celui-ci est mis en œuvre, notamment dans son intégralité, par le conducteur. Différents niveaux d'expérience du conducteur peuvent alors être définis en fonction de valeurs seuils du nombre d'occurrences d'exécution d'un service considéré.

A titre d'exemple, le niveau d'expérience du conducteur peut être défini selon que le conducteur est « débutant », « initié » ou « expert » dans l'utilisation d'un service considéré. En effet, afin de ne pas perturber le conducteur, et donc de ne pas générer une situation à risque, il peut être préférable de limiter, voire bloquer, l'accès à certains services, notamment lorsque de tels services impliquent une sollicitation plus importante de l'attention du conducteur. Selon un exemple non limitatif, un conducteur peut être considéré comme étant débutant pour un service considéré s'il l'a exécuté moins de trois fois, comme initié lorsqu'il l'a exécuté entre trois et cinq fois et comme expert lorsqu'il l'a exécuté plus de cinq fois.

Une telle sous-étape E51 est suivie d'une sous-étape de comparaison E52 du niveau d'expérience du conducteur avec un indice d'expérience propre à chacun desdits services, un tel indice définissant un niveau minimum d'expérience requis par le conducteur pour la bonne exécution du service. Par exemple, un exercice de respiration présentant un indice d'expérience « expert » peut être rendu inaccessible à un conducteur débutant et n'être rendu disponible qu'après l'exécution de services similaires dont l'indice d'expérience est inférieur. Autrement dit, un service est sélectionné lorsqu'il présente un indice d'expérience inférieur ou égal au niveau d'expérience du conducteur détecté.

Additionnellement ou alternativement, chaque service peut présenter différents paliers de difficultés, chacun desdits paliers étant défini par un indice d'expertise lui étant propre. Le palier « expert », d'un service, par exemple de l'exercice de respiration précité, peut alors être rendu inaccessible à un conducteur n'ayant pas au préalable exécuté les paliers « débutant » et/ou « initié ». Le système de sélection 12 peut alors, tel que précédemment exposé, mettre en œuvre un décompte des occurrences d'exécution de chaque palier et soumettre l'accessibilité d'un service de palier défini à l'exécution d'un nombre d'occurrences prédéfini des paliers de niveau inférieur.

Selon un exemple particulier de réalisation, illustré en pointillés à la figure 2, l'indice d'expérience propre à un service peut également être ajusté par l'unité de traitement en fonction des données relatives à l'état physiologique du conducteur et/ou en fonction des données relatives au contexte extérieur et/ou au contexte intérieur au véhicule tels que précédemment exposé. De la sorte, l'indice d'expérience de l'exercice de respiration de niveau « expert » précédemment cité peut être modifié en fonction desdites données. Par exemple, l'indice d'expérience peut être abaissé lorsque le statut du véhicule 1 indique que ce dernier est à l'arrêt, de sorte que le service est alors rendu accessible à un conducteur présentant un niveau d'expérience « débutant » vis-à-vis de ce service. Le procédé peut alors comprendre une sous-étape d'ajustement E53 de l'indice d'expérience propre à au moins un service, par exemple exécutée préalablement à l'étape E51 ou à l'étape E52.

De manière optionnelle, lors de l'exécution de l'étape de consultation de l'expertise du conducteur E21, le système de sélection 12 peut également prendre en compte un niveau de conduite du conducteur, correspondant notamment à une ancienneté du permis du conducteur préalablement renseignée par celui-ci. Par exemple, un conducteur présentant un permis dont l'ancienneté est supérieure à trois ans peut être classé comme étant un conducteur expérimenté. A l'inverse, un conducteur dont le permis présente une ancienneté inférieure à trois ans peut être considéré comme un jeune conducteur ou un conducteur novice.

Ainsi, la sélection E100 d'au moins un service relaxant ou stimulant dans la liste enregistrée sur l'unité de mémoire 11 et/ou l'élément de mémoire 14 en fonction de l'état physiologique ou d'un besoin du conducteur, de son niveau de disponibilité, de ses préférences d'utilisation et de son niveau d'expertise, résulte en l'obtention d'un sous-ensemble de services présentant un nombre de services strictement inférieur au nombre de services compris dans la liste initiale. Le sous-ensemble comprend ainsi avantageusement des services adapté(s) au contexte relatif au conducteur, au contexte intérieur du véhicule et au contexte extérieur au véhicule 1.

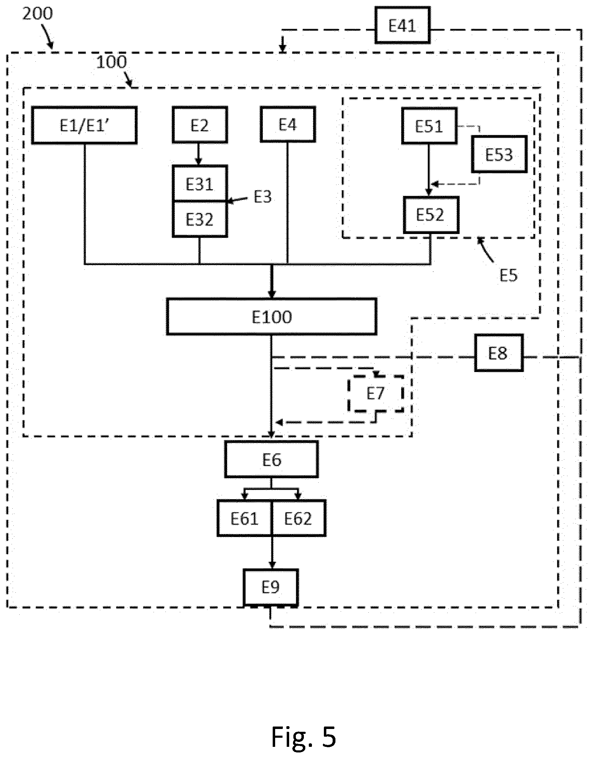

Suite à l'exécution du procédé de sélection 100, tel qu'illustré aux figures 2 ou 5, le véhicule peut, dans le cadre du procédé de relaxation ou de stimulation 200 tel que cité précédemment, mettre en œuvre une étape d'exécution E6 d'un service sélectionné. L'étape d'exécution E6 est particulièrement mise en œuvre lorsque le nombre de services sélectionnés compris dans le sous-ensemble de services à l'issue de procédé de sélection est supérieur ou égal à 1. Si le sous-ensemble comprend un unique service, le véhicule 1 met alors directement en œuvre cette étape d'exécution E6.

Optionnellement, lorsque le sous-ensemble comprend une pluralité de services, le procédé de sélection 100 comprend, en outre, une étape de sélection aléatoire E7, ici représentée en pointillés, de sorte à ne sélectionner qu'un seul service à exécuter. Une telle sélection est notamment mise en œuvre par l'unité de traitement 13. Le véhicule 1 peut ensuite exécuter le service sélectionné tel que précédemment exposé.

Optionnellement, une fois qu'un unique service est sélectionné dans la liste de services, c'est-à-dire suite à la sélection E100 ou suite à la sélection E7, le procédé peut comprendre une étape de contrôle E201, d'un statut d'au moins un moyen 300 de mise en œuvre du service sélectionné. L'unité de contrôle 20 et/ou l'unité de traitement 13 peut alors détecter des données relatives au statut, en temps réel, de l'au moins un moyen 300, c'est-à-dire détecter par exemple s'il est en cours de fonctionnement ou non ou encore détecter des paramètres et réglages exécutés si le moyen 300 est en cours d'utilisation. L'unité de contrôle 20 peut alors comparer les données relatives au statut détecté de l'au moins un moyen 300 avec des données enregistrées sur l'unité de mémoire 11 et/ou la mémoire de stockage 14 relatives à un statut à exécuter, correspondant notamment à des paramètres ou réglages à mettre en œuvre afin de permettre l'exécution du service sélectionné. Lorsque l'unité de contrôle 20 et/ou l'unité de traitement 13 détecte(nt) que ces données sont identiques, c'est-à-dire que le service sélectionné est déjà exécuté, par exemple du fait d'un cycle antérieur d'exécution du procédé de relaxation ou de stimulation, le procédé de sélection peut alors être répété immédiatement ou ultérieurement. Lorsque de telles données diffèrent, c'est-à-dire que le service sélectionné n'est pas en cours d'exécution, le véhicule 1 peut ensuite exécuter ledit service. Par exemple, pour un service relaxant nécessitant que le système de création d'ambiance lumineuse mette en œuvre un éclairage dans des tons froids, si l'unité de contrôle 20 et/ou l'unité de traitement 13 détecte(nt) que ledit système est déjà en cours d'utilisation avec ces mêmes paramètres ou réglages, alors le procédé pourra être répété, notamment afin de permettre la sélection d'un nouveau service au sein de la liste de services.

Tel qu'illustré aux figures 2 et 5, si le sous-ensemble est vide, c'est-à-dire qu'il comprend un nombre nul de services, une étape d'interruption anticipée E8 du procédé de relaxation ou de stimulation peut alors être exécutée. Le procédé peut alors être répété, immédiatement ou ultérieurement.

Le système 12 exécute ensuite, ultérieurement à l'exécution E6 d'un service, une étape de sauvegarde E61 du niveau d'expérience de l'utilisateur relativement audit service ou une étape de modification E62 du niveau d'expérience de l'utilisateur relativement audit service préalablement enregistré. Ainsi, le niveau d'expérience du conducteur est mis à jour après chaque cycle d'exécution du procédé de relaxation ou de stimulation et la sélection future d'un service, réalisée lors d'une exécution ultérieure du procédé de sélection 100, peut être optimisée.

Selon une option non représentée, le système, notamment l'unité de contrôle 20 et/ou l'unité de traitement 13, peut mettre en œuvre une étape de contrôle de la bonne exécution du service sélectionné. Une telle étape est mise en œuvre selon un principe similaire à celui de l'étape E201. Le procédé peut alors être configuré de sorte qu'il est répété lorsqu'une anomalie est détectée dans l'exécution du service, c'est-à-dire lorsque des données détectées relatives au statut d'au moins un moyen 300 de mise en œuvre du service diffèrent de données enregistrées, notamment relatives au statut, aux paramètres ou réglages, qui devraient être observées lorsque le service est exécuté correctement.

Selon un mode d'exécution alternatif du procédé de sélection, le procédé de sélection 100 peut comprendre, comme mentionné précédemment, une étape de renseignement E1' d'un besoin du conducteur en lieu d'une étape de détection E1 d'un état physiologique du conducteur. Une telle alternative d'exécution est sensiblement identique au mode d'exécution précédemment détaillé, aussi la description ci-dessus s'applique *mutatis mutandis à* la présente alternative. Le conducteur peut, manuellement ou vocalement, renseigner un besoin par l'intermédiaire de l'interface Homme-machine par exemple. Une telle étape E1' peut alors déclencher la mise en œuvre du procédé selon l'invention.

Selon une option d'exécution, illustrée à la figure 5, le système de sélection 12 peut être programmé de manière telle qu'il prévient l'exécution d'une pluralité de services, chacun propre à un cycle d'exécution distinct du procédé de relaxation ou de stimulation 200, dans un intervalle de temps prédéfini. Autrement dit, suite à une étape d'exécution E6 d'un service mise en œuvre lors d'un cycle *nₓ* d'exécution du procédé de relaxation ou de stimulation 200, le système de sélection 12 peut être configuré afin de mettre en œuvre une étape de blocage E9 de l'exécution des étapes du procédé de sélection 100 dans un cycle d'exécution *n*_{*x*+1} lorsqu'une durée écoulée depuis l'étape d'exécution E6 du cycle *nₓ* d'exécution du procédé est inférieure à une valeur seuil de durée, par exemple inférieure à 15 minutes. Autrement dit, le système de sélection 12 peut être configuré pour effectuer un décompte d'une durée écoulée depuis la mise en œuvre d'une étape d'exécution E6 antérieure.

La figure 6 illustre un exemple particulier d'exécution du procédé de sélection selon l'invention, similaire à ce qui a été précédemment décrit, aussi, la description et les différents modes et alternatives ci-dessus s'appliquent *mutatis mutandis.* Le présent exemple d'exécution se distingue du précédent en ce qu'il comprend deux phases distinctes, successives l'une à l'autre, de sélection d'un service.

Particulièrement, le procédé comprend une première phase de sélection A1 d'un premier sous-ensemble de services, comprenant au moins un service, au sein de la liste de services, la première phase de sélection A1 permettant une sélection E101 d'au moins un service en fonction de l'état physiologique du conducteur ou la première phase de sélection étant réalisée en fonction d'un besoin du conducteur afin de répondre à celui-ci. Autrement dit, lors de la première phase de sélection A1, l'étape de détection E1 d'un état physiologique du conducteur ou l'étape de renseignement E1' d'un besoin du conducteur est exécutée. Notamment, le procédé peut être initié par la détection d'un état du conducteur par le véhicule.

Le système 12, en particulier l'unité de traitement 13, met en œuvre une première phase de sélection, au sein de la liste de services, du premier sous-ensemble de services. Le premier sous-ensemble comprend au moins un service. Similairement à ce qui a été précédemment exposé, lorsque le procédé comprend l'étape de détection E1 d'un état du conducteur, le ou les services sélectionnés et intégrés au premier sous-ensemble de services vise(nt) à corriger l'état détecté du conducteur, c'est-à-dire qu'il vise à ramener le conducteur vers, ou dans, un état équilibré.

Optionnellement, le procédé peut être programmé de manière telle qu'il est exécuté lorsqu'un état anormal, c'est-à-dire non équilibré, du conducteur est détecté. Dans un tel cas, la sélection E101 puis la deuxième phase A2 de sélection peuvent être mises en œuvre lorsque qu'un état anormal du conducteur est détecté lors de l'étape E1. Autrement dit, le procédé peut être configuré de manière telle qu'il s'interrompe suite à l'étape de détection E1 lorsqu'un état normal, ou équilibré, du conducteur est détecté. Alternativement, lorsqu'un état normal, ou équilibré, est détecté, le ou les service(s) intégré(s) aux premier sous-ensemble(s) peuvent être sélectionnés selon qu'ils permettent de maintenir un tel état.

Le procédé comprend, ensuite, une deuxième phase de sélection A2 d'un deuxième sous-ensemble de services au sein du premier sous-ensemble. La deuxième phase de sélection A2 permet une sélection E102 réalisée en fonction du niveau de disponibilité du conducteur, de ses préférences d'utilisation et en fonction de son niveau d'expertise tels qu'exposés précédemment. La deuxième phase de sélection A2 comprend alors tout ou partie des différentes étapes et sous-étapes relatives au niveau de disponibilité, aux préférences et au niveau d'expertise du conducteur. Notamment, la deuxième phase de sélection A2 peut comprendre au moins :
- l'étape de calcul E3 d'un niveau de disponibilité du conducteur en fonction des données relatives au contexte extérieur et/ou au contexte intérieur au véhicule;
- l'étape de consultation E4 de préférences d'utilisation du conducteur ;
- l'étape de consultation E5 de données caractérisant un niveau d'expérience du conducteur au moins défini en fonction d'un niveau d'expérience d'utilisation des services par le conducteur.

Optionnellement, la deuxième phase peut comprendre l'étape de détection E2 du contexte extérieur et/ou du contexte intérieur au véhicule tel qu'exposé ci-dessus.

Un tel mode permet avantageusement d'optimiser les ressources du véhicule de manière à ce que le système de sélection 12, s'il est programmé de la sorte, n'exécute la deuxième phase de sélection A2 que lorsque la situation le nécessite.

Une fois la deuxième phase de sélection A2 exécutée, le système obtient ainsi un deuxième sous-ensemble de services, issu du premier sous-ensemble et donc de la liste initiale de services, adaptés au contexte relatif au conducteur, au contexte du véhicule 1 et au contexte extérieur au véhicule 1. Optionnellement, lorsque le sous-ensemble comprend une pluralité de services, le procédé peut comprendre l'étape de sélection aléatoire E7 telle que précédemment décrite, correspondant ici à une troisième phase de sélection. Egalement, le procédé peut optionnellement comprendre l'étape de contrôle E201 telle qu'exposé plus haut. Le véhicule 1 peut ensuite exécuter le service sélectionné tel que précédemment exposé.

La présente invention propose ainsi un procédé de sélection d'un service à l'attention d'un conducteur d'un véhicule automobile parmi une liste d'une pluralité de services destinés au conducteur, le procédé permettant une sélection adaptée à des contextes relatifs au conducteur, au véhicule et à l'environnement extérieur de manière à optimiser le confort et la sécurité du conducteur à moindre coût, notamment en mettant en œuvre des équipements déjà intégrés au véhicule.

## Revendications

1. Procédé de sélection (100) d'un service relaxant ou stimulant pour un conducteur d'un véhicule automobile (1) équipé d'au moins une unité de mémoire (11) dans laquelle est enregistrée une liste de services destinés au conducteur, le procédé étant **caractérisé en ce qu'**il comprend :
- une étape de détection (E1) d'un état physiologique du conducteur par l'intermédiaire d'une unité de surveillance (16) du véhicule ou une étape de renseignement (E1') d'un besoin du conducteur par l'intermédiaire d'une interface Homme-machine du véhicule;
- - une étape de détection (E2) d'un contexte extérieur et/ou d'un contexte intérieur au véhicule par l'intermédiaire d'au moins l'un parmi un ou des système(s) d'aide à la conduite (19), un ou des organes de mesure (18), un moyen de localisation (15) du véhicule ou un appareil connecté; et
- - une étape de calcul (E3) d'un niveau de disponibilité du conducteur en fonction des données relatives au contexte extérieur et/ou au contexte intérieur au véhicule;
- - une étape de consultation (E4) de préférences d'utilisation du conducteur sauvegardées sur une unité de mémoire (11) du véhicule ; et
- - une étape de consultation (E5) de données caractérisant au moins un niveau d'expérience d'utilisation des services relaxants ou stimulants par le conducteur ; puis
- - la sélection (E101, E102, E103) d'au moins un service relaxant ou stimulant dans la liste de services étant réalisée en fonction de l'état physiologique du conducteur ou en fonction du besoin du conducteur, en fonction du niveau de disponibilité du conducteur, en fonction des préférences d'utilisation du conducteur et en fonction des données caractérisant le niveau d'expérience du conducteur du véhicule.

2. Procédé de sélection (100) selon la revendication précédente, comprenant une première phase de sélection (A1) d'un premier sous-ensemble de services, comprenant au moins un service, au sein de la liste de services, la première phase de sélection (A1) étant réalisée en fonction de l'état physiologique du conducteur afin de corriger l'état détecté du conducteur ou la première phase de sélection (A1) étant réalisée en fonction d'un besoin du conducteur afin de répondre à celui-ci, le procédé comprenant, ensuite, une deuxième phase de sélection (A2) d'un deuxième sous-ensemble de services, au sein du premier sous-ensemble, réalisée en fonction du niveau de disponibilité du conducteur, en fonction des préférences d'utilisation du conducteur et en fonction du niveau d'expérience du conducteur.

3. Procédé de sélection (100) selon l'une des revendications précédentes, comprenant une étape de sélection aléatoire (E7), mise en œuvre lorsque une pluralité de services sont disponibles à l'issue de la sélection d'au moins un service en fonction de :
- l'état physiologique du conducteur ou du besoin du conducteur, et
- du niveau de disponibilité, et
- des préférences d'utilisation, et
- du niveau d'expérience du conducteur.

4. Procédé de sélection (100) selon l'une des revendications précédentes, dans lequel l'étape de détection (E1) d'un état du conducteur comprend :
- une sous-étape de mesure (E11) d'au moins un paramètre émotionnel et/ou physiologique du conducteur ; et/ou
- une sous-étape de détection (E13) d'au moins un comportement de conduite anormal ou à risque par au moins un système d'aide (19) à la conduite et/ou par un organe de mesure (18) équipé(s) dans le véhicule ; et
- une sous-étape de classification (E12, E12') de l'état du conducteur en fonction du paramètre physiologique du conducteur et/ou en fonction du comportement de conduite du conducteur, la sélection d'un service étant mise en œuvre lorsqu'un état anormal du conducteur est détecté.

5. Procédé de sélection (100) selon l'une des revendications précédentes, dans lequel l'étape de consultation (E5) du niveau d'expérience du conducteur comprend une étape de détermination (E51) du niveau d'expérience d'utilisation des services en fonction d'un nombre d'occurrences d'exécution, par le conducteur, des services et une étape de comparaison (E52) du niveau d'expérience avec un indice d'expérience, propre à chaque service et définissant un niveau minimum d'expérience requis par le conducteur pour la bonne exécution du service, le service étant sélectionné lorsque l'indice d'expérience est inférieur ou égal au niveau d'expérience du conducteur détecté.

6. Procédé de relaxation ou de stimulation (200) d'un conducteur d'un véhicule automobile, le procédé comprenant dans un premier temps les étapes du procédé de sélection (100) selon l'une des revendications précédentes puis une étape d'exécution (E6) d'au moins un service sélectionné par au moins un moyen 300 de mise en œuvre dudit service, l'étape d'exécution E6 étant mise en œuvre lorsque un nombre de services sélectionnés à l'issue de procédé de sélection (100) est supérieur ou égal à 1, ou une étape d'interruption anticipée (E8) du procédé d'exécution, mise en œuvre lorsque le nombre de services sélectionnés à l'issue de procédé de sélection (100) est nul.

7. Procédé de relaxation ou de stimulation (200) selon la revendication précédente, comprenant une étape de blocage (E9) d'une répétition des étapes du procédé de sélection (100) mise en œuvre suite à une étape d'exécution (E6) d'un service lors d'un cycle (nₓ) d'exécution du procédé de sorte à prévenir l'exécution successive de services dans un intervalle de durée inférieur à une valeur seuil prédéfinie.

8. Procédé de relaxation ou de stimulation selon la revendication 6 ou 7, comprenant, ultérieurement à l'exécution (E6) d'un service, une étape de sauvegarde (E61) du niveau d'expérience du conducteur relativement audit service ou une étape de modification (E62) d'un niveau d'expérience du conducteur relativement audit service préalablement enregistré.

9. Système de sélection (12) d'un service relaxant ou stimulant pour un conducteur d'un véhicule automobile (1), le système comprenant des éléments matériels et/ou logiciels mettant en œuvre le procédé de sélection (100) selon l'une des revendications 1 à 5, les éléments matériels comportant au moins une unité de traitement (13) de données configurée pour coopérer avec au moins une unité de mémoire (11) sur laquelle est enregistrée la liste de services destinés au conducteur.

10. Véhicule automobile équipé d'un système de sélection selon la revendication précédente et d'au moins un moyen (300) de mise en œuvre d'un ou plusieurs service(s) relaxant(s) ou stimulant(s).

## Patentansprüche

1. Auswahlverfahren (100) eines Entspannungs- oder Stimulationsdiensts für einen Fahrer eines Kraftfahrzeugs (1), das mit mindestens einer Speichereinheit (11) ausgestattet ist, in der eine Liste von für den Fahrer bestimmten Diensten gespeichert ist, wobei das Verfahren **dadurch gekennzeichnet ist, dass** es enthält:
- einen Schritt der Erkennung (E1) eines physiologischen Zustands des Fahrers mittels einer Überwachungseinheit (16) des Fahrzeugs oder einen Schritt der Mitteilung (E1') eines Bedürfnisses des Fahrers mittels einer Mensch-Maschine-Schnittstelle des Fahrzeugs;
- einen Schritt der Erkennung (E2) eines äußeren Kontexts und/oder eines inneren Kontexts des Fahrzeugs mittels mindestens einem von einem Fahrassistenzsystem oder Fahrassistenzsystemen (19), einem Messorgan oder Messorganen (18), einer Lokalisierungseinrichtung (15) des Fahrzeugs oder einem angeschlossenen Gerät; und
- einen Schritt der Berechnung (E3) eines Verfügbarkeitsniveaus des Fahrers abhängig von den Daten bezüglich des äußeren Kontexts und/oder inneren Kontexts des Fahrzeugs;
- einen Schritt der Abfrage (E4) von Nutzungspräferenzen des Fahrers, die in einer Speichereinheit (11) des Fahrzeugs gespeichert sind; und
- einen Schritt der Abfrage (E5) von Daten, die mindestens ein Nutzungserfahrungsniveau der Entspannungs- oder Stimulationsdienste durch den Fahrer kennzeichnen; dann
- die Auswahl (E101, E102, E103) mindestens eines Entspannungs- oder Stimulationsdiensts aus der Liste von Diensten abhängig vom physiologischen Zustand des Fahrers oder abhängig vom Bedürfnis des Fahrers, abhängig vom Verfügbarkeitsniveau des Fahrers, abhängig von den Nutzungspräferenzen des Fahrers und abhängig von den das Erfahrungsniveau des Fahrers des Fahrzeugs kennzeichnenden Daten realisiert wird.

2. Auswahlverfahren (100) nach dem vorhergehenden Anspruch, das eine erste Phase der Auswahl (A1) einer ersten Untereinheit von Diensten, die mindestens einen Dienst enthält, innerhalb der Liste von Diensten enthält, wobei die erste Auswahlphase (A1) abhängig vom physiologischen Zustand des Fahrers realisiert wird, um den erkannten Zustand des Fahrers zu korrigieren, oder die erste Auswahlphase (A1) abhängig von einem Bedürfnis des Fahrers realisiert wird, um diesem zu entsprechen, wobei das Verfahren anschließend eine zweite Auswahlphase (A2) einer zweiten Untereinheit von Diensten innerhalb der ersten Untereinheit enthält, die abhängig vom Verfügbarkeitsniveau des Fahrers, abhängig von den Nutzungspräferenzen des Fahrers und abhängig vom Erfahrungsniveau des Fahrers realisiert wird.

3. Auswahlverfahren (100) nach einem der vorhergehenden Ansprüche, das einen Schritt der Zufallsauswahl (E7) enthält, der durchgeführt wird, wenn eine Vielzahl von Diensten am Ende der Auswahl mindestens eines Diensts zur Verfügung stehen, abhängig von:
- dem physiologischen Zustand des Fahrers oder dem Bedürfnis des Fahrers, und
- dem Verfügbarkeitsniveau, und
- den Nutzungspräferenzen, und
- dem Erfahrungsniveau des Fahrers.

4. Auswahlverfahren (100) nach einem der vorhergehenden Ansprüche, wobei der Schritt der Erkennung (E1) eines Zustands des Fahrers enthält:
- einen Teilschritt der Messung (E11) mindestens eines emotionalen und/oder physiologischen Parameters des Fahrers; und/oder
- einen Teilschritt der Erkennung (E13) mindestens eines anormalen oder riskanten Fahrverhaltens durch mindestens ein Fahrassistenzsystem (19) und/oder durch ein Messorgan (18), das(die) im Fahrzeug eingerichtet ist(sind); und
- einen Teilschritt der Klassifizierung (E12, E12') des Zustands des Fahrers abhängig vom physiologischen Parameter des Fahrers und/oder abhängig vom Fahrverhalten des Fahrers, wobei die Auswahl eines Diensts durchgeführt wird, wenn ein anormaler Zustand des Fahrers erkannt wird.

5. Auswahlverfahren (100) nach einem der vorhergehenden Ansprüche, wobei der Schritt der Abfrage (E5) des Erfahrungsniveaus des Fahrers einen Schritt der Bestimmung (E51) des Nutzungserfahrungsniveaus der Dienste abhängig von einer Anzahl von Ausführungsvorgängen der Dienste durch den Fahrer und einen Schritt des Vergleichs (E52) des Erfahrungsniveaus mit einem Erfahrungsindex enthält, der jedem Dienst eigen ist und ein vom Fahrer gefordertes Mindesterfahrungsniveau für die korrekte Ausführung des Diensts definiert, wobei der Dienst ausgewählt wird, wenn der Erfahrungsindex niedriger als das oder gleich dem erkannten Erfahrungsniveau des Fahrers ist.

6. Verfahren zur Entspannung oder Stimulation (200) eines Fahrers eines Kraftfahrzeugs, wobei das Verfahren zunächst die Schritte des Auswahlverfahrens (100) nach einem der vorhergehenden Ansprüche, dann einen Schritt der Ausführung (E6) mindestens eines von mindestens einer Einrichtung 300 zur Durchführung des Diensts ausgewählten Diensts, wobei der Ausführungsschritt E6 durchgeführt wird, wenn eine Anzahl von am Ende des Auswahlverfahrens (100) ausgewählten Diensten größer als oder gleich 1 ist, oder einen Schritt der vorzeitigen Unterbrechung (E8) des Ausführungsverfahrens enthält, der durchgeführt wird, wenn die Anzahl von am Ende des Auswahlverfahrens (100) ausgewählten Diensten null ist.

7. Verfahren zur Entspannung oder Stimulation (200) nach dem vorhergehenden Anspruch, das einen Schritt der Blockierung (E9) einer Wiederholung der Schritte des Auswahlverfahrens (100) enthält, der nach einem Schritt der Ausführung (E6) eines Diensts in einem Ausführungszyklus (nₓ) des Verfahrens durchgeführt wird, um die aufeinanderfolgende Ausführung von Diensten in einem Intervall einer geringeren Dauer als ein vordefinierter Schwellwert zu verhindern.

8. Verfahren zur Entspannung oder Stimulation nach Anspruch 6 oder 7, das anschließend an die Ausführung (E6) eines Diensts einen Schritt des Speicherns (E61) des Erfahrungsniveaus des Fahrers bezüglich des Diensts oder einen Schritt der Änderung (E62) eines vorher gespeicherten Erfahrungsniveaus des Fahrers bezüglich des Diensts enthält.

9. Auswahlsystem (12) eines Entspannungs- oder Stimulationsdiensts für einen Fahrer eines Kraftfahrzeugs (1), wobei das System Hardware- und/oder Softwareelemente enthält, die das Auswahlverfahren (100) nach einem der Ansprüche 1 bis 5 durchführen, wobei die Hardwareelemente mindestens eine Verarbeitungseinheit (13) von Daten aufweisen, die konfiguriert ist, um mit mindestens einer Speichereinheit (11) zusammenzuwirken, in der die Liste von für den Fahrer bestimmten Diensten gespeichert ist.

10. Kraftfahrzeug, das mit einem Auswahlsystem nach dem vorhergehenden Anspruch und mit mindestens einer Einrichtung (300) zur Durchführung eines oder mehrerer Entspannungs- oder Stimulationsdienste ausgestattet ist.

## Claims

1. Method (100) for selecting a relaxing or stimulating service for a driver of a motor vehicle (1) equipped with at least one memory unit (11) in which a list of services intended for the driver is stored, the method being **characterized in that** it comprises:
- a step (E1) of detecting a physiological state of the driver by way of a monitoring unit (16) of the vehicle or a step (E1') of providing information about a need of the driver by way of a human-machine interface of the vehicle;
- a step (E2) of detecting a context external and/or a context internal to the vehicle by way of at least one out of one or more driving assistance systems (19), one or more measuring members (18), a locating means (15) of the vehicle or a connected device; and
- a step (E3) of computing a level of availability of the driver on the basis of the data in relation to the context external and/or to the context internal to the vehicle;
- a step (E4) of consulting use preferences of the driver that are saved in a memory unit (11) of the vehicle; and
- a step (E5) of consulting data characterizing at least one level of experience that the driver has of using the relaxing or stimulating services; and then
- the selection (E101, E102, E103) of at least one relaxing or stimulating service from the list of services being carried out on the basis of the physiological state of the driver or on the basis of the need of the driver, on the basis of the level of availability of the driver, on the basis of the use preferences of the driver and on the basis of the data characterizing the level of experience of the driver of the vehicle.

2. Selection method (100) according to the preceding claim, comprising a first selection phase (A1) of selecting a first subset of services, comprising at least one service, within the list of services, the first selection phase (A1) being carried out on the basis of the physiological state of the driver in order to correct the detected state of the driver or the first selection phase (A1) being carried out on the basis of a need of the driver in order to address said need, the method then comprising a second selection phase (A2) of selecting a second subset of services, within the first subset, carried out on the basis of the level of availability of the driver, on the basis of the use preferences of the driver and on the basis of the level of experience of the driver.

3. Selection method (100) according to either of the preceding claims, comprising a random selection step (E7), implemented when a plurality of services are available at the end of the selection of at least one service on the basis of:
- the physiological state of the driver or the need of the driver, and
- the level of availability, and
- the use preferences, and
- the level of experience of the driver.

4. Selection method (100) according to one of the preceding claims, wherein the step (E1) of detecting a state of the driver comprises:
- a sub-step (E11) of measuring at least one emotional and/or physiological parameter of the driver; and/or
- a sub-step (E13) of detecting at least one abnormal or risky driving behaviour by way of at least one driving assistance system (19) and/or by way of a measuring member (18) fitted in the vehicle; and
- a sub-step (E12, E12') of classifying the state of the driver on the basis of the physiological parameter of the driver and/or on the basis of the driving behaviour of the driver, a service being selected when an abnormal state of the driver is detected.

5. Selection method (100) according to one of the preceding claims, wherein the step (E5) of consulting the level of experience of the driver comprises a step (E51) of determining the level of experience of using the services on the basis of a number of occurrences of the driver executing the services, and a step (E52) of comparing the level of experience with an experience index, specific to each service and defining a minimum level of experience required by the driver to execute the service correctly, the service being selected when the experience index is lower than or equal to the detected level of experience of the driver.

6. Method (200) for relaxing or stimulating a driver of a motor vehicle, the method first comprising the steps of the selection method (100) according to one of the preceding claims, and then a step (E6) of executing at least one service selected by at least one means (300) for implementing said service, the execution step (E6) being implemented when a number of services selected at the end of the selection method (100) is greater than or equal to 1, or a step (E8) of interrupting the execution method early, implemented when the number of services selected at the end of the selection method (100) is zero.

7. Relaxation or stimulation method (200) according to the preceding claim, comprising a step (E9) of blocking a repetition of the steps of the selection method (100), implemented following a step (E6) of executing a service in an execution cycle (nₓ) of the method so as to prevent the successive execution of services within an interval of a duration less than a predefined threshold value.

8. Relaxation or stimulation method according to Claim 6 or 7, comprising, following the execution (E6) of a service, a step (E61) of saving the level of experience of the driver in relation to said service or a step (E62) of modifying a previously stored level of experience of the driver in relation to said service.

9. System (12) for selecting a relaxing or stimulating service for a driver of a motor vehicle (1), the system comprising hardware and/or software elements implementing the selection method (100) according to one of Claims 1 to 5, the hardware elements comprising at least one data processing unit (13) configured to cooperate with at least one memory unit (11) in which the list of services intended for the driver is stored.

10. Motor vehicle equipped with a selection system according to the preceding claim and with at least one means (300) for implementing one or more relaxing or stimulating services.
